# EUROPÄISCHE PATENTANMELDUNG

(11) **EP 1 460 389 A2**
(43) Veröffentlichungstag der Anmeldung: **22.09.2004**
(21) Anmeldenummer: 04005520.4
(22) Anmeldetag: 09.03.2004
(51) Int. Cl.: G01D 5/249

(54) **Messsystem zur Absoluterfassung von Winkeln und Wegen**

(30) Priorität: 18.03.2003 DE 10312045
(71) Anmelder: Rodi, Anton, 69181 Leimen (DE)
(72) Erfinder: Rodi, Anton, 69181 Leimen (DE)

(57) **Zusammenfassung**

Es wird ein Messsystem zur Absolutwerterfassung von Winkeln und Wegen beschrieben, bei dem der Maßstab eine Messspur zur Absolutwertbildung aufweist, die von einer Sensoranordnung (S1, S2) erfasst wird, bei dem weiterhin der Maßstab aus wenigstens zwei in gleicher Weise zur Absolutwerterfassung ausgebildeten Teilstrecken zusammengesetzt ist, bei dem auf dem Maßstab mindestens eine geeignete Spur zur Bestimmung des Absolutwerts der jeweils erreichten Teilstrecke mittels der Sensoranordnung vorgesehen ist und bei dem Schaltmittel vorgesehen sind, die aus dem Absolutwert der Teilstrecke und dem ermittelten Absolutwert innerhalb der Teilstrecke den Gesamtabsolutwert zur Weiterverarbeitung zur Verfügung stellen, wobei eine Versorgung des Systems aus einem Netz erfolgt.

Weiterhin ist eine Schaltungsanordnung vorgesehen, die bei Ausfall des Netzes auf Hilfsnetzbetrieb umschaltet, wobei in dieser Betriebsart die Sensorenanordnung nur zur Bestimmung des Absolutwerts der jeweils errichten Teilstrecke benutzt wird.

## Beschreibung

Die Erfindung betrifft ein Messsystem zur Absolutwerterfassung von Winkeln und Wegen mit den Merkmalen des Oberbegriffs des Anspruchs 1.

Ein derartiges Längenmesssystem ist aus der DE 101 17 193.5 bekannt.

Ausgehend von einem solchen Längenmesssystem liegt der Erfindung die Aufgabe zu Grunde, bei Netzausfall den völligen Verlust des Messwerts zu vermeiden.

Diese Aufgabe wird durch die Merkmale des Anspruchs 1 gelöst.

Dieser Hilfsnetzbetrieb kann durch die erfindungsgemäße Maßnahme bei einem sehr viel geringeren Stromverbrauch durchgeführt werden, so dass z. B. eine kleine Batterie als Hilfsenergie für eine lange Betriebszeit ausreicht. Trotzdem wird dauernd festgehalten, in welcher Teilstrecke sich die Sensoranordnung befindet, so dass bei Wiederherstellung des Netzbetriebs ohne besondere Eingabe sofort wieder die exakte Stellung der Sensoranordnung angezeigt wird. Eine permanent vorhandene Hilfsenergie lässt zudem die Verwendung einfach und kostengünstig integrierbare RAM-Speicher mit sehr geringem Stromverbrauch zu, die zudem beliebig oft beschrieben und gelesen werden können.

Man kann zur Auswertung nur einen Sensor benutzen, mit dem beide Teilwerte, d h. sowohl der Teilstrecke selbst, als auch die absolute Position innerhalb der Teilstrecke, erfasst werden können. Jedoch können auch zwei getrennte Sensoren verwendet werden, mit denen die beiden Maßstabsspuren (Teilstrecken-Messspur und geeignete Spur zur Teilstreckenzählung) getrennt erfasst werden In der Patentanmeldung DE 102 30 471.8 ist ausgeführt, dass diese geeignete Spur auch die Teilstrecken-Messspur oder selbst ein Teil der Absolut-Messspur sein kann, also nicht unbedingt eine gesonderte Spur sein muss.

Das Absolut-Messsystem lässt sich aber auch dort vorteilhaft anwenden, wo das Messobjekt selbst zwar keine speziell aufgebrachten Markierungen aufweist, aber einen strukturierten Werkstoff oder strukturierter Oberfläche und damit Maßstab mit Messspur beinhaltet. Der strukturierte Werkstoff, bzw. die strukturierte Oberfläche braucht nur im Wirkungsbereich der Sensoren im Anwendungseinsatz vorhanden sein und kann somit nur ein Teil des Messobjektes umfassen, das damit den Maßstab bildet. Bekannt sind Messmethoden, die z. B. über geeignete optische Komponenten mit Lichtstrahlen und Sensoren die determinierten periodischen Signale von z. B. Papier, Stahl- und Kunststoffbändern usw. in Relativbewegung auswerten. Über solche Auswertmethoden geben z. B. die Patentschriften DE 2 163 200 C2 und DE 2 133 942 einen Einblick, wobei Letztere sogar nicht determinierte und statistisch schwankende Messsignale von z. B. bewegten Blechbändern über das Korrelationsverfahren entsprechend auswerten.

Solche Messobjekte sind entweder in ihren Werkstoffeigenschaften selbst geeignet determiniert, z. B. bei Kunststoffen, oder die durch Schleifen, Feinstdrehen usw. bearbeiteten Oberflächen, z. B. bei Kolben weisen die nötigen Strukturen für eine geeignete Messspur zur Auswertung auf. In der Patentschrift DE 3 418 854A1 und DE 3 4 181 190A1 werden bei Lack- und Resistschichten über Ultraschall die gewünschten Strukturen optisch vorstrukturiert und über Ultraschall fest im Werkstoff fixiert, sowie auch mit Ultraschall messtechnisch danach überprüft. Es gibt somit vielfältige physikalische Messmethoden (z. B. elektromagnetische Strahlung, Laserlicht, Schall usw.) um z. B. über die Oberfläche von bewegten Messkörpern als Maßstab mit Messspur entsprechende Messsignale über geeignete Sensoren auszuwerten.

Die Verwendung von zwei getrennten Sensoren hat den Vorteil, dass diese als redundante Sensoren nutzbar sind. Der erwähnte eine Sensor oder die Sensoren bei der erwähnten Verwendung zweier Sensoren kann oder können in der Praxis jeweils Teil eines Mehrfachsensors mit parallelen Sensoren sein.

Für beide Fälle, nämlich der Verwendung nur eines Sensors S1 bzw. S2 oder der Verwendung von zwei Sensoren S1 und S2 gilt der Grundgedanke, dass bei Ausfall der Netzversorgung mittels des Hilfsnetzes lediglich die Sensorfunktion zur Erfassung der Teilstrecken, also Zählung der Teilstrecken in besonders Strom sparender Weise erhalten bleibt. Eine Sicherheitsschaltung mit Logik wird zweckmäßigerweise bei Testläufen oder auch nach jeder Neueinschaltung der Netzversorgung aktiviert, die nach Auswertkriterien der Funktion dann mittels einer Schaltungsanordnung die jeweiligen Sensoren auswählt. Dabei ist die passive Redundanz besonders empfehlenswert, weil sie weniger Stromverbrauch hat und höhere Bauteilezuverlässigkeit aufweist und damit zur höheren Verfügbarkeit der Messeinrichtung beiträgt. Zusätzlich ist es aber empfehlenswert, den Zähler für Teilstrecken während des Netzbetriebs aktiv redundant durch den vorhandenen zweiten Sensor mittels eines zusätzlichen Zählers für Teilstrecken zu überprüfen, um einerseits die Sensoren gegenseitig als auch den Absolut-Teilstreckenzähler über den Gesamtabsolutwert in der "Sicherheitsschaltung" zu überwachen. Somit kann auch während dem Netzbetrieb im Fehlerfalle auf den entsprechend redundanten Sensor umgeschaltet werden. Damit wird eine preiswerte "Einfehlersicherheit" durchgängig gewährleistet, die für viele Anwendungen in der Industrie für Personensicherheit und Vermeidung von Folgeschäden gefordert wird und die sonst durchgängige teure und platzaufwändige Mehrfachmesssysteme erfordern würde.

Die Aufteilung der Funktionen mit Netz- und Hilfsnetzbetrieb, sowohl für den Betrieb mit einem Sensor S1 bzw. S2 als auch mit redundanter Sensoranordnung S1 mit S2 wurde so gewählt, dass die Messwertauswertung im Hilfsnetzbetrieb mit sehr geringer Stromaufnahme von einigen 10uA die absolut kodierten Teilstrecken erfassen kann und einen Batteriebetrieb für Zeiträume bis über 10 Jahre sicher gewährleistet. Durch diese Strom sparende Teilstreckenerfassung sind sowohl einfache Sensoren, z. B. mit Sin/Cos-Signalen als auch Maßstäbe mit z. B. einfach herstellbaren N/S Magnetpolen für Magnet-Absolutsysteme, oder z. B. bei optischen Absolut-Messsystemen mit jeweils abwechselnden Hell-Dunkel-Maßstabs-Teilungen vorteilhaft einsetzbar.

Bei Teilstrecken, deren Zählung auf Magnetpolen basieren, kann bei der Relativbewegung die Permanent-Energie für die Signalwandlung der Sensorensignale verwendet werden. Die ist z. B. bei Verwendung von Sensoren, die auf Hall- bzw. magnetoresistive Effekte reagieren möglich, so dass deren Anwendung aus der Sicht eines geringen Hilfsenergiebedarfs besonders vorteilhaft ist. Der Grundgedanke der erfinderischen Ausgestaltung der Messanordnung ist aber unabhängig von dem physikalischen Effekt der realisierten Sensoren anwendbar und auch nicht abhängig von der Ausgestaltung der Hilfsenergie.

Die Erfindung wird nun anhand der Ausführungsbeispiele der Zeichnung näher erläutert.

Es zeigen:
- Fig. 1: ein einfaches Beispiel ohne Redundanz
- Fig. 2 und 3: Beispiele mit redundanten Auswertemöglichkeiten

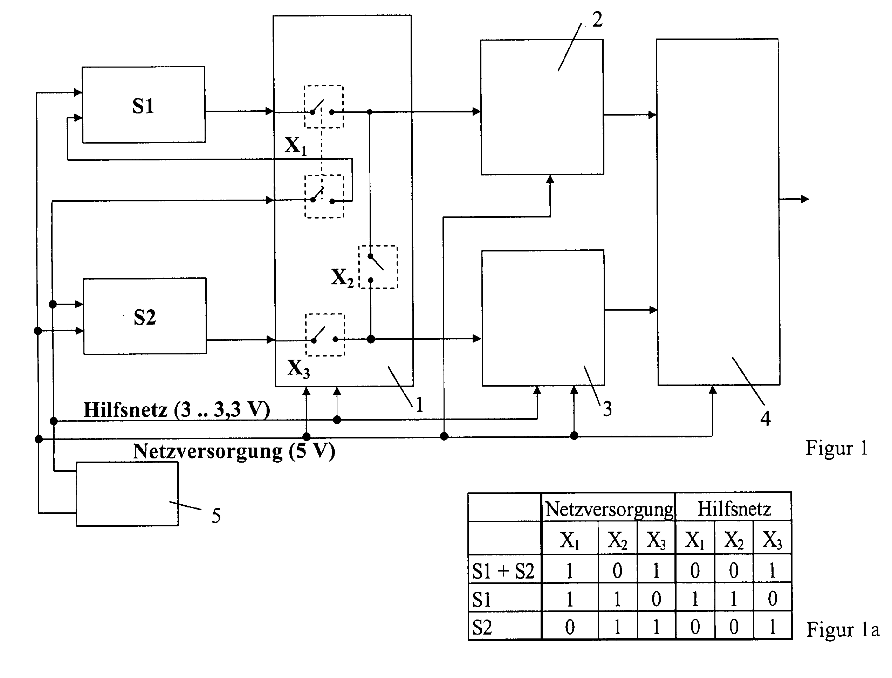

In Fig. 1 sind Sensoren S1 und S2 dargestellt, die über eine Schaltungsanordnung 1 mit Schaltern X₁ bis X₃ zu Blöcken 2 und 3 durchschaltbar sind. Im Block 2 wird der Absolutwert innerhalb einer Teilstrecke erfasst, in Block 3 wird der Absolutwert der Teilstrecken gezählt. Der Block 4 erzeugt aus diesen beiden Absolutwerten den Gesamtabsolutwert. Außerdem ist ein Netzblock 5 vorgesehen, der normalerweise die Blöcke S₁, S₂ und 1 bis 4 mit einer Netzspannung von z. B. 5V versorgt. Der Netzblock 5 gibt auf einem zweiten Ausgang aber auch eine Hilfsnetzspannung von z. B. 3 bis 3,3V ab.

Unterhalb der Fig. 1 ist in Fig. 1a eine Tabelle aufgeschrieben, in der die Fälle
a) es sind zwei Sensoren S1 und S2 vorhanden
b) es ist nur ein Sensor S1 oder
c) es ist nur ein Sensor S2 vorgesehen

Für diese drei Fälle sind nebeneinander die Schalterstellungen 1 (Schalter geschlossen) oder 0 (Schalter offen) für die Schalter X₁ bis X₃ im Netzbetrieb und ein Hilfsnetzbetrieb aufgeschrieben. Es ist hier unterstellt, dass bei Verwendung von zwei Sensoren S1 und S2 der Sensor S1 Signale abgibt, aus denen der Absolutwert innerhalb der Teilstrecken ermittelbar ist. S2 dient dann zur Ermittlung des Absolutwerts der Teilstrecken. Ist nur S1 oder S2 vorhanden, so müssen aus den Signalen dieser Sensoren beide Absolutwerte ableitbar sein.

Daraus folgt: Sind beide Sensoren vorgesehen, so sind diese bei Netzbetrieb an die Blöcke 2 und 3 zur Auswertung entsprechend angeschaltet. Im Hilfsnetzbetrieb ist lediglich S2 an den Auswerteblock 3 für die Teilstreckenzählung angeschaltet.

Ist lediglich S1 vorgesehen, so liegt dieser normalerweise über X₁ und X₂ an beiden Auswerteblöcken 2 und 3. Dies trifft auch im Hilfsnetzbetrieb zu, in dem S1 über X₁ zusätzlich ans Hilfsnetz angeschaltet ist, aber Block 2 unversorgt ist. Es werden somit nur die Teilstrecken gezählt. Bei Verwendung nur des Sensors S2 gilt für den Netzbetrieb praktisch das Gleiche nämlich X₃ und X₂ sind geschlossen. Im Hilfsnetzbetrieb ist jedoch nur Schalter X₃ geschlossen, das heißt es werden auch jetzt nur die Teilstrecken gezählt. Die Schalter X₁ bis X₃ sind in der Praxis elektronische Schalter, z. B. Halbleiterschalter.

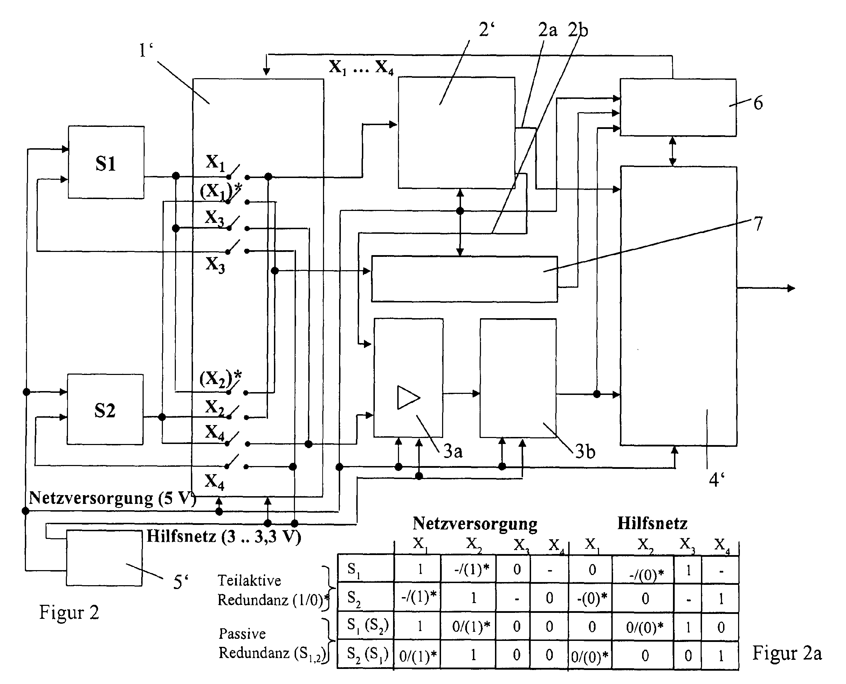

Beim Ausführungsbeispiel der Fig. 2 sind wieder Sensoren S1 und S2, ein Schaltblock 1' und Auswerteblöcke 2', 3a und 3b, 4' und ein Netz-/Hilfsnetzblock 5' dargestellt. Außerdem ist hier eine Logikschaltung 6 vorgesehen, die aus ihren Eingangssignalen die Notwendigkeit für die Umschaltung der Schalter X im Schaltblock 1' erkennt. Der Block 2' ist hier so gestaltet, dass er aus einem Sensorsignal sowohl den Absolutwert innerhalb der Teilstrecken aus z. B. Sin-/Cos-Signalen ermitteln kann, als auch die Teilstreckenzahl aus den Nulldurchgängen der Sin/Cos-Signale erkennt und ein entsprechendes Zählsignal über Leitung 2b abgibt. Die Zählung erfolgt im Block 3b. 3a ist ein vorgeschalteter Verstärkerblock. Ein zusätzlicher Block 7 enthält ebenfalls einen Verstärker und Zähler für die Teilstrecken. Er ist aus Redundanzgründen vorgesehen.

Die Sensoren S1 und S2 sind in diesem Fall Sensoren, aus deren Ausgangssignalen beide Absolutwerte, sowohl der Teilstrecken als auch der Position innerhalb der Teilstrecke, ableitbar sind.

In Fig. 2 sind Schalter X₁ bis X₄ und zusätzlich Schalter X₁* und X₂^{*} vorgesehen. Durch Letztere sind hier Schaltmöglichkeiten vorgesehen, die eine teilaktive Redundanz und eine passive Redundanz ermöglichen. Bei der teilaktiven Redundanz wird laufend die Zählung der Teilstrecken parallel von beiden Sensoren vorgenommen und in der Sicherheitsschaltung 6 verglichen. Bei der passiven Redundanz tritt der zweite Sensor an die Stelle des anderen, wenn dessen Ausfall festgestellt wird.

Im Normalbetrieb (sh. Tabelle Fig. 2a), das heißt Versorgung durch das Netz, ist in beiden Fällen über X₁, bzw. X₂ entweder S1 oder S2 an den Block 2' angeschaltet, der über seine beiden Ausgänge einmal ein dem Absolutwert innerhalb der Teilstrecke entsprechendes Signal auf Ausgang 2a abgibt und über Ausgang 2b den Blöcken 3a/3b signalisiert, wenn ein Übergang zu einer anderen Teilstrecke stattgefunden hat, der in Block 3b gezählt wird. Wird eine teilaktive Redundanz verwendet und S1 ist über X₂ durchgeschaltet, so wird der Sensor S1 über X₂^{*} auch mit dem Block 7 verbunden, das heißt die Teilstrecken werden auch im Zähler 7 gezählt. Die Ergebnisse der beiden Zählungen in den Blöcken 3b und 7 werden im Sicherheitsblock 6 verglichen. Bei Abweichen wird auf S2 umgeschaltet, das heißt X₂ und X₁* werden durchgeschaltet und wieder verglichen.

Ist Hilfsnetzbetrieb notwendig, so wird S1 oder S2 über X₃, bzw. X₄ an den Zähler 3a und 3b angeschaltet. Das Zählergebnis wird im Block 3b oder im Block 4 gezählt. Zusätzlich wird über die Schalter X₃', bzw. X₄' das Hilfsnetz an die Sensoren S1 bzw. S2 angelegt.

Im Falle der passiven Redundanz liegt bei Verwendung von S1 als Hauptsensor dieser über X₁ am Block 2'an. Fällt S1 aus, so wird über X₂ der Redundanzsensor S2 entsprechend angeschaltet. Entsprechend wird umgeschaltet, wenn S2 Hauptsensor ist und S1 Redundanzsensor.

Im Hilfsnetzbetrieb wird im ersten Fall S1 über X3 an den Zähler 3a/3b angeschaltet, im zweiten Fall S2 über X₄. Außerdem erfolgt die Hilfsnetzversorgung der Sensoren S1 und S2 über Schalter X₃', bzw. X₄'.

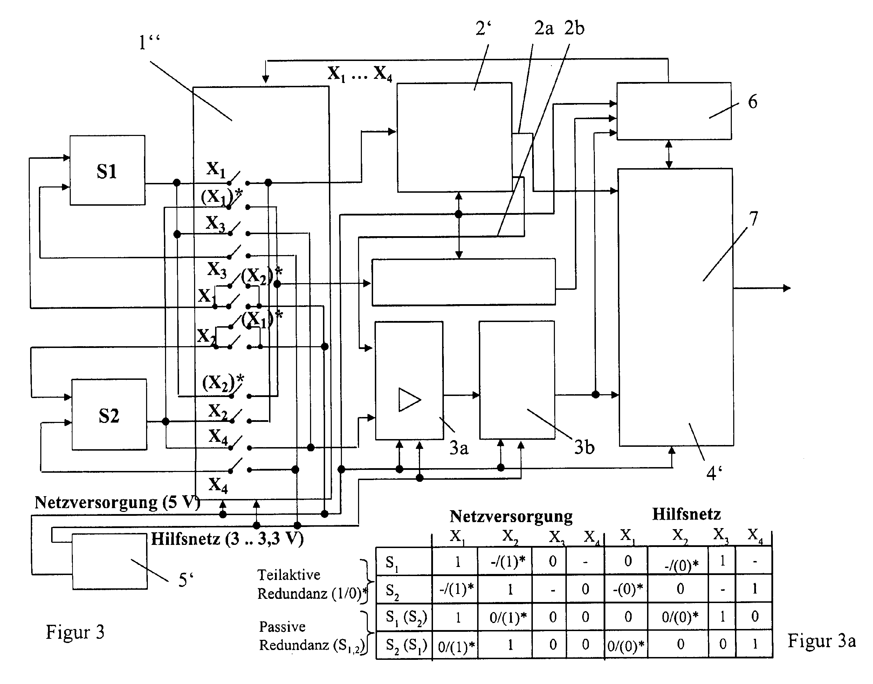

Fig. 3 und 3a unterscheiden sich von Fig. 2 und 2a nur dadurch, dass durch weitere Schalter X₁' und X₂', bzw. X₁*' und X₂*' auch das Hauptnetz an die Sensoren an- bzw. abgeschaltet werden kann.

## Patentansprüche

1. Messsystem zur Absolutwerterfassung von Winkeln und Wegen, bei dem der Maßstab eine Messspur zur Absolutwertbildung aufweist, die von einer Sensoranordnung (S1, S2) erfasst wird, bei dem der Maßstab aus wenigstens zwei in gleicher Weise zur Absolutwerterfassung ausgebildeten Teilstrecken zusammengesetzt ist, und bei dem auf dem Maßstab mindestens eine geeignete Spur zur Bestimmung des Absolutwerts der jeweils erreichten Teilstrecke mittels der Sensoranordnung (S1, S2) vorgesehen ist und bei dem Schaltmittel (4) vorgesehen sind, die aus dem Absolutwert der Teilstrecke (1a bis 1c) und dem ermittelten Absolutwert innerhalb der Teilstrecke den Gesamtabsolutwert zur Weiterverarbeitung zur Verfügung stellen, wobei eine Versorgung des Systems aus einem Netz (5) erfolgt, **dadurch gekennzeichnet, dass** eine Schaltungsanordnung (1) vorgesehen ist, die bei Ausfall des Netzes (5) auf Hilfsnetzbetrieb umschaltet, und dass in dieser Betriebsart die Sensorenanordnung (S1, S2) nur zur Bestimmung des Absolutwerts der jeweils erreichten Teilstrecke benutzt wird.

2. Messsystem nach Anspruch 1, **dadurch gekennzeichnet, dass** die Sensoranordnung nur einen Sensor (S1 oder S2) umfasst, der sowohl die Messspur zur Absolutwertbildung als auch die geeignete Spur zur Bestimmung des Absolutwerts der Teilstrecke auswertet.

3. Messsystem nach Anspruch 1, **dadurch gekennzeichnet, dass** die Sensoranordnung wenigstens zwei Sensoren (S1, S2) umfasst, von denen der eine die Messspur zur Absolutwertbildung und der andere die geeignete Spur zu Bestimmung des Absolutwerts der Teilstrecke auswertet.

4. Messsystem nach einem der Anspruche 1 oder 3, **dadurch gekennzeichnet, dass** bei Verwendung von wenigstens zwei Sensoren (S1, S2) ein Sensor (S2 oder S1) jeweils als Redundanz für den anderen Sensor (S1 oder S2) dient (passive Redundanz)

5. Messeinnchtung nach einem der Ansprüche 1 bis 3, **dadurch gekennzeichnet, dass** die von einer Sensoranordnung (S1 oder S2) kommenden Signale oder Signalteile, die zur Bestimmung der Teilstrecken nutzbar sind, einer zweiten Auswerteeinrichtung (7, 7') zugeführt werden und dass die beiden ermittelten Teilstreckenergebnisse in einer Vergleichsschaltung (6) miteinander verglichen werden und bei Abweichung auf eine andere Sensoranordnung (S2 oder S1) umgeschaltet wird. (teilaktive Redundanz)

6. Messeinrichtung nach einem der Ansprüche 1 bis 5, **dadurch gekennzeichnet, dass** bei Einschaltung des Hilfsnetzbetriebs das Hilfsnetz (5) mittels Schalter (X3', X4') an die in diesem Betrieb benötigten Sensoranordnungen (S1, S2) und/oder Teile der Auswerteschaltung (3a, 3b) angeschaltet werden.

7. Messeinrichtung nach Anspruch 6, **dadurch gekennzeichnet, dass** bei Hilfsnetzbetrieb die Verbindungen des Hauptnetzes den Sensoranordnungen (S1, S2) und/oder wenigstens einem Teil der Auswerteschaltung durch Schalter (X₁', X₂', X₁*', X₂*') unterbrochen werden.
